# EUROPEAN PATENT APPLICATION

(11) **EP 1 118 406 A1**
(43) Date of publication of application: **25.07.2001**
(21) Application number: 01850011.6
(22) Date of filing: 17.01.2001
(51) Int. Cl.: B23B 23/02

(54) **Centre point tip**

(30) Priority: 20.01.2000 SE 0000159
(71) Applicant: Hagby Asahi Aktiebolag, 713 21 Nora (SE)
(72) Inventor: Sandin, Martin, 713 30 Nora (SE)
(74) Representative: Arwidi, Bengt Dr.

(57) **Abstract**

The present invention is for a conical centre point tip for fixed centres for use with working machines in which a work-piece rotates during the working. The invention also is for a method at production of conical centre point tip where grooves are formed in the conical envelope surface (2) of the centre point tip (1) and that a hard material selected from the group of polycrystalline diamond (PCD) and cubic boron nitride (PCBN) is moulded in situ in the grooves to inserts (4) which extend themselves outside the conical envelope surface. The inserts (4) which are formed in the grooves are ground so that the transfer to the conical surface is soft. Preferably the inserts (4) are shaped so that the number of support points between inserts (4) and work-piece is 3-6 and the inserts extend themselves along all of or essentially all of the conical envelope surface (2) from the top or upper edge (5) to the base (6) of it.

## Description

The present invention is for a centre point tip and method for production thereof. The centre point tip is intended for fixed centre points for use at working machines in which a piece to be machined is rotating during the working, for example milling or grinding. Usually the work-piece is made from metal, ceramic or graphite.

At milling, circular grinding and similar working operations there is often used a fixed or movable centre point which is applied at the centre of rotation of the work-piece. The centre point is to hold the work-piece and ensure that it rotates without being out of truth during all operations where the centre point hole defines the centre of rotation.

In case of fixed centre points the tip of the centre is taken up in a bottomed hole in the work-piece. The size of the hole may vary within wide limits due to factors such as the size of the work-piece and the way in which the hole is made. Conventional fixed centre points made from steel or some kind of hard metal become worn to various extent and this may cause ovality of the centre point resulting in increased wobbling of the work-piece.

In order to reduce the wear of the centre point it has been proposed to equip centre points by polycrystalline diamond (PCD). The properties of the material then brings with it that these centre points accept only a very limited interval of the diameter of the centre point holes. Centre points which have been made by soldering of segments of PCD which have then been worked to the desired outer shape and dimension will accept a greater centre point hole diameter interval but the method of production is very costly and this kind of products are generally not profitable.

The object of the present invention is to advise a centre point tip for fixed centre points which give an increase of the precision of the production by means of reduced wear of the centre point tip. It is also an object of the invention to advise of a method of making such centre point tip in a way which makes it possible that the active wear surface of the centre point tip is made from a small amount of hard material of the kinds of polycrystalline diamond (PCB) or cubic boron nitride (PCBN). This is achieved by that grooves are made in the surface of the centre point tip and that inserts from PCD or PCBN are formed in the grooves by in situ sintering. In this way one achieves economic advantages by a simplified process for production. Compared to the alternative method of soldering prefabricated inserts one also achieves technical advantages by the possibilities to give a desired shape to the insert and to get a common tip.

The features which are characteristics of the invention and embodiments of it are apparent from the claims.

The invention will below be described more in detail with reference to the example of embodiments which are shown in the enclosed figures.

Figure 1 shows a centre in which there is mounted a centre point according to the invention.

Figure 2 shows a centre point tip according to the invention.

Figure 3 is a side view of the centre point tip of figure 2.

Figure 4 shows the centre point tip of figure 2 viewed along its longitudinal axis in a direction towards the top of conical surface of the centre point tip.

Figure 5 shows another embodiment of the centre point tip.

The centre point 1 is mounted in a centre 7 of conventional design. The mounting section of the centre point 1 has a mainly cylindrical envelope surface while that section of the centre point which can be inserted into the centre point hole of the work-piece has a conical envelope surface 2. The tip angle v is 30-120 degrees, preferably about 60 degrees. In the conical envelope surface 2 grooves have been cut out in which there are inserts 4 of hard material such as PCD or PCBN. The inserts are made by in situ formation in the grooves which have been milled or made in another way in the conical surface. The inserts are formed by sintering of the inlay material in the groove and then grinding it so that there will be soft passages between the inserts and the adjacent surface.

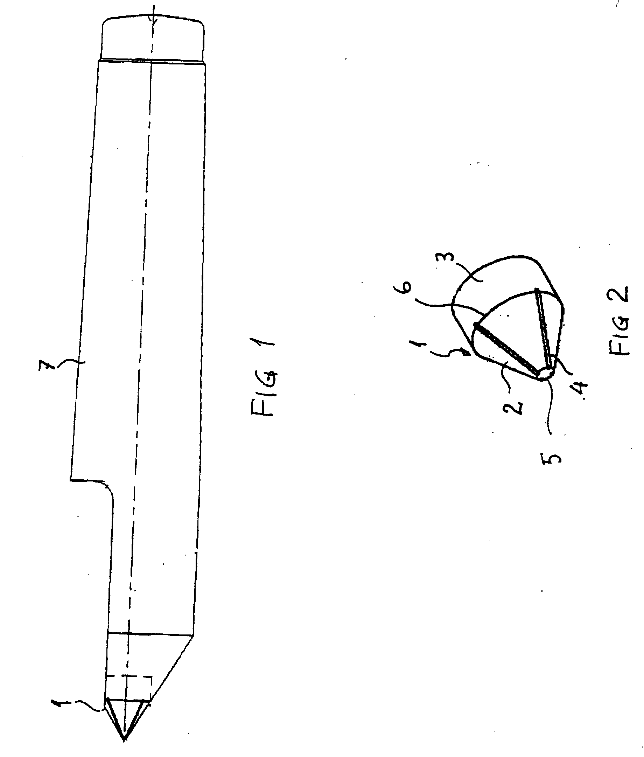

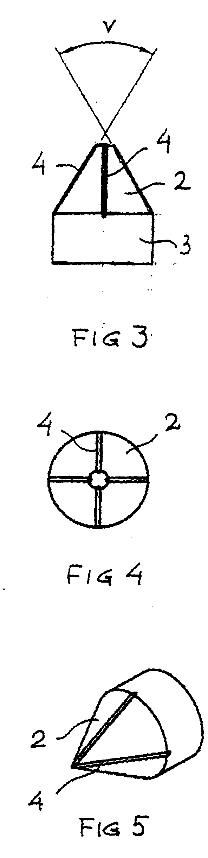

Preferably the centre point tip is made as shown in the figures, most preferred is the embodiment of figures 2-4. The centre point 1 includes a lower section having a cylindrical envelope surface 3 for mounting of the centre point at the centre 7, and an upper section having a conical envelope surface 2. The grooves for the inserts have been made in the conical envelope surface and thereafter been filled with the inserts 4 so that the latter extend themselves somewhat above the most adjacent part of the conical surface. The shape of the inserts is chosen so that the number of supporting points of the work-piece at the inserts is not less than 3 and preferably not more than 6. Closest to the bottom of the conical section there may also be shorter inserts which extend themselves only halfway up towards the top of the cone. The inserts which are shown in the figures extend themselves from the base of the conical section to its top or to the upper borderline if the cone is truncated. In the embodiments which are shown the inserts are straight and parallel with the centre axis of the centre point. In other embodiments the inserts may be oblique relative to the centre axis, they may also be of spiral or parabola shaped or be layed out in other ways at the conical surface.

## Claims

1. Method at production of conical centre point tip for use with working machines in which a work-piece rotates during the working characterized in that grooves are formed in the conical envelope surface (2) of the centre point tip (1) and that a hard material selected from the group of polycrystalline diamond (PCD) and cubic boron nitride (PCBN) is moulded in situ in the grooves to inserts (4) which extend themselves outside the conical envelope surface.

2. Method according to claim 1 characterized in that the inserts (4) which are formed in the grooves are ground so that the transfer to the conical surface is soft.

3. Conical centre point tip for fixed centres for use with working machines in which a work-piece rotates during the working characterized in that it comprises grooves which are formed in the conical envelope surface (2) of the centre point tip (1) and that inserts (4) of a hard material selected from the group of polycrystalline diamond (PCD) and cubic boron nitride (PCBN) are moulded in situ in the grooves and that the inserts (4) extend themselves outside the conical envelope surface (2).

4. Centre point tip according to claim 3 characterized in that the inserts are shaped so that the number of support points between inserts (4) and work-piece is 3-6.

5. Centre point tip according to claim 3 or 4 characterized in that the grooves and the inserts extend themselves along all of or essentially all of the conical envelope surface (2) from the top or upper edge (5) to the base (6) of it.

6. Centre point tip according to any of the claims 3-5 characterized in that the grooves and the inserts (4) are straight and parallel to the centre axis of the centre point tip.

7. Centre point tip according to any of the claims 3-6 characterized in that the grooves and the inserts (4) or their extensions meet at the a the top of the conical envelope surface.
